# EUROPEAN PATENT APPLICATION

(11) **EP 2 487 404 A1**
(43) Date of publication of application: **15.08.2012**
(21) Application number: 10810816.8
(22) Date of filing: 27.01.2010
(51) Int. Cl.: F21S 2/00, F21V 19/00, G02F 1/13357, H01L 33/00, F21Y 101/02

(54) **LIGHT SOURCE MODULE AND ELECTRONIC APPARATUS PROVIDED WITH SAME**

(30) Priority: 07.10.2009 JP 2009233919
(71) Applicant: Sharp Kabushiki Kaisha, Osaka-shi, Osaka 545-8522 (JP)
(72) Inventor: HANAOKA, Tohru, Osaka 545-8522 (JP); NISHIOKA, Sumito, Osaka 545-8522 (JP); TAKAYAMA, Takeshi, Osaka 545-8522 (JP)
(74) Representative: Müller - Hoffmann & Partner
(86) International application number: PCT/JP2010/000463
(87) International publication number: WO 2011/042999

(57) **Abstract**

A light source module of the present invention includes: a plurality of light guide bodies (21) provided in parallel to one another with respect to a longitudinal direction; light sources (30) each causing light to enter each of the plurality of light guide bodies from at least one end surface in a longitudinal direction of the each of the light guide bodies (21); a light source wiring boards (32) having the light sources (30) and lines provided thereon, the lines being for electrically connecting the light sources (30) and including positive potential lines and negative potential lines; and an LED driver circuit (40) for performing a drive for turning on the light sources (30). Each of the light sources (30) provided to the light guide bodies (21) are independently driven by the LED driver circuit (40) so that each of the light sources (30) is independently turned on. Among lines provided on the light source wiring board (32) connected to the light sources 30, at least two high potential anode lines (30a) is arranged to be a common line. This makes it possible to provide a light source module whose thickness can be reduced by reduction of a wiring area, and an electronic device including the light source module, in a case where a side edge light guide plate is divided into a plurality of blocks.

## Description

### Technical Field

The present invention relates to a light source module and an electronic device including the light source module. This light source module is used, for example, in a liquid crystal display device, for a backlight that includes a side edge (also called sidelight) light guide plate for reducing a thickness of the liquid crystal display device. The side edge light guide plate causes surface light emission of light from a light source.

### Background Art

In recent years, in liquid crystal display devices, a backlight including a side edge (also called sidelight) light guide plate is often used for reducing thicknesses of the liquid crystal display devices. The side edge light guide plate causes surface light emission of light from a light source.

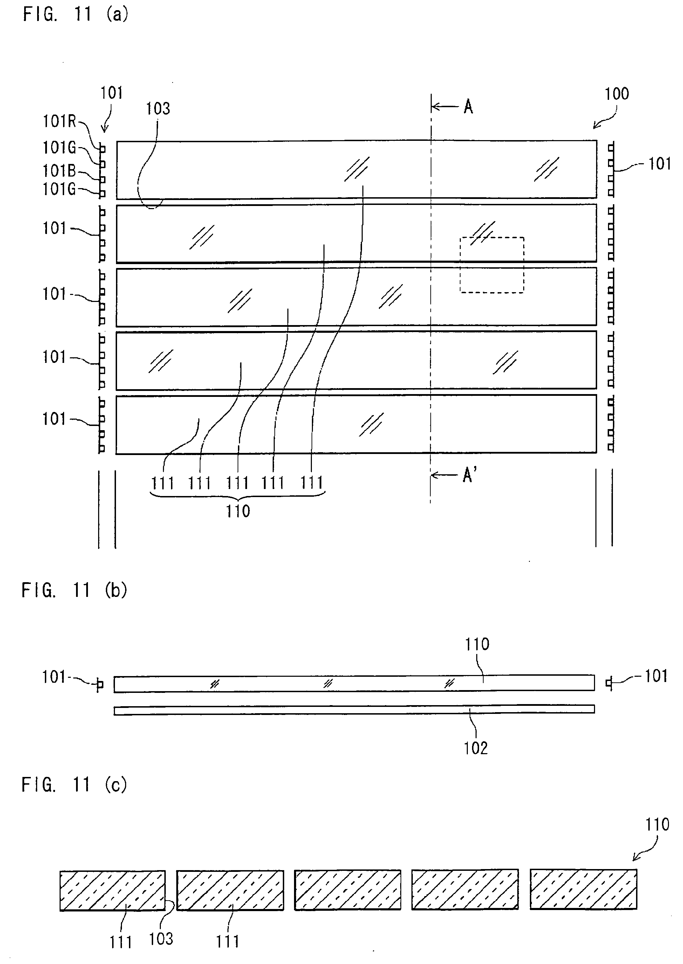

As such a side edge light guide plate, for example, Patent Document 1 discloses an illumination device. As shown in Figs. 11(a) to 11(c), an illumination device 100 disclosed in Patent Document 1 includes: a light guide plate 110 made of a plurality of light guide bodies 111 arranged in a row; and a plurality of light sources 101 that are respectively provided for the light guide bodies 111 of the light guide plate 110 and that illuminate the light guide bodies 111, respectively. Each of the light sources 101 is made of one red LED (Light Emitting Diode) 101R, two green LEDs 101G, and one blue LED 101B.

Further, under the light guide plates 110, a reflection sheet 102 is provided. In addition, a gap 103 made of an air layer of more than 0.1 µm is formed between adjacent light guide bodies 111.

In this way, the illumination device 100 lights up in a configuration where the side edge light guide plate is divided into a plurality of blocks.

Further, Patent Document 2 discloses a technique called "backlight scan". In the backlight scan, for suppressing a feel of viewing an afterimage and improving performance of moving image display, a light source module as a backlight is divided into a plurality of blocks and light of the backlight is sequentially turned off from a top to a bottom of a screen in synchronization with rewriting of video signals.

Further, Patent Document 3 discloses a technique called "local dimming". In the local dimming, for improving display performance by enhancing a contrast of a liquid crystal display device, luminances of a video signal are corrected. More specifically, in the local dimming, a light source module as a backlight is divided into a plurality of blocks and luminances of a video signal are corrected in accordance with a luminance distribution so that, while a luminance of a light source block corresponding to a dark part of a video image is decreased, a luminance of a light source block corresponding to a bright part of the video image is increased.

### Citation List

### [Patent Literature]

[Patent Literature 1]
   Japanese Patent Application Publication, *Tokukai,* No. 2008-34372 (published on February 14, 2008)
[Patent Literature 2]
   Japanese Patent Application Publication, *Tokukai,* No. 2007-108288 (published on April 26, 2007)
[Patent Literature 3]
   Japanese Patent Application Publication, *Tokukai,* No. 2007-293339 (published on November 8, 2007)
[Patent Literature 4]
   Japanese Patent Application Publication, *Tokukai,* No. 2007-128821 (published on May 24, 2007)

### Summary of Invention

### Technical Problem

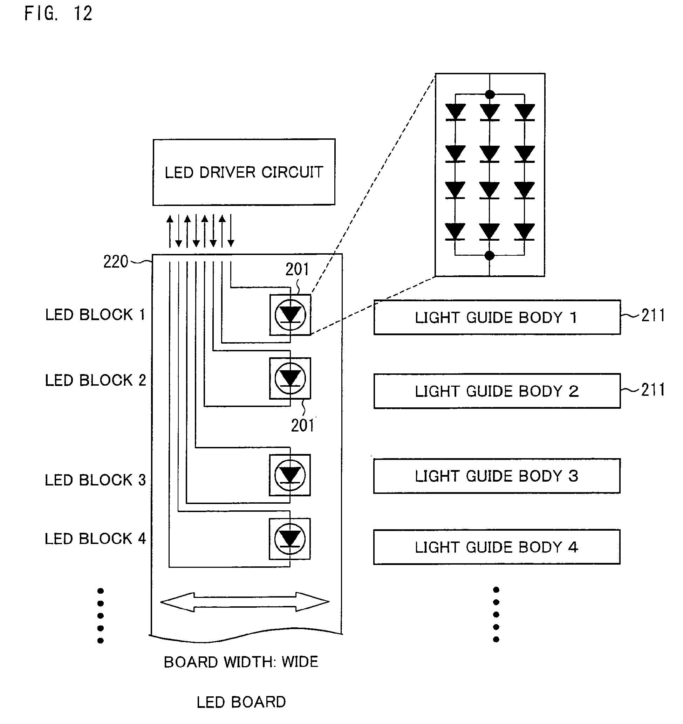

In a case where a conventional side edge light guide plate as described above is divided into a plurality of blocks and each LED block is independently driven, a line on an anode side and a line on a cathode side of each LED block 201 which correspond to each light guide body 211 need to be independently drawn as shown in Fig. 12.

In the conventional light source module, in a case where the number of blocks is N, 2N lines are required. Accordingly, for securing a wiring area, a width of an LED board 220 provided to a side surface of light guide bodies becomes large. Consequently, it becomes impossible to reduce a thickness of an LED backlight as a light source module and, for example, a liquid crystal display device or a television as an electronic device including the LED backlight.

Note that in a case where the side edge light guide plate is not divided into a plurality of blocks, reduction of a thickness of a light source module is possible, for example, by connecting a plurality of LEDs in series with use of 2 x 2 lines in two systems as described in Patent Literature 4.

The present invention is attained in view of the above conventional problems. An object of the present invention is to provide a light source module whose thickness can be reduced by reduction of a wiring area in a case where a side edge light guide plate is divided into a plurality of blocks, and an electronic device including the light source module.

### Solution to Problem

In order to solve the problems described above, a light source module of the present invention includes: a plurality of light guide bodies provided in parallel to one another with respect to a longitudinal direction; light sources each causing light to enter each of the plurality of light guide bodies from at least one end surface in a longitudinal direction of the each of the light guide bodies; a light source wiring board having the light sources and lines provided thereon, the lines being for electrically connecting the light sources and including positive potential lines and negative potential lines; and a light source drive circuit for performing a drive for turning on the light sources, the light sources provided for the plurality of light guide bodies being independently driven by the light source drive circuit so that each of the light sources is independently turned on, the lines being arranged so that at least two high potential lines are arranged to be a common line, the lines being provided on the light source wiring board connected to the light sources.

According to the above invention, the light source module includes: a plurality of light guide bodies provided in parallel to one another with respect to a longitudinal direction; light sources each causing light to enter each of the plurality of light guide bodies from at least one end surface in a longitudinal direction of the each of the light guide bodies; a light source wiring board having the light sources and lines provided thereon, the lines being for electrically connecting the light sources and including positive potential lines and negative potential lines; and a light source drive circuit for performing a drive for turning on the light sources. Accordingly, the light source module of the present invention is a side edge (also called sidelight) light source module. In the present invention, each of the light sources provided to the light guide bodies is independently driven by the light source drive circuit so that each light source is turned on independently.

In such a light source module, a line on an anode side and a line on a cathode side of each light source corresponding to each light guide body needs to be independently drawn. However, in a conventional light source module, when the number of the light sources is N, 2N lines are required. Accordingly, for ensuring a wiring area, a width of a light source wiring board provided to a side surface of the light guide bodies becomes large. Consequently, it becomes impossible to reduce a thickness of the light source module and an electronic device including the light source module.

In order to solve the above problem, in the present invention, among the lines provided on the light source wiring board connected to the light sources, at least two high potential lines are arranged to be a common line. More specifically, for example, between anode lines and cathode lines of at least every two light sources among the light sources can be arranged to be a common line. As a result, the number of lines on the light source wiring board can be reduced. Consequently, by reducing a width of the light source wiring board, a thickness of the light source module can be reduced.

Therefore, in a case where the side edge light guide plate is divided into a plurality of blocks, it is possible to provide a light source module whose thickness can be reduced by reduction of a wiring area.

In order to solve the above problems, an electronic device of the present invention includes the above described light source module.

According to the above-described invention, it is possible to provide an electronic device including a light source module whose thickness can be reduced by reduction of a wiring area.

### Advantageous Effects of Invention

As described above, in a light source module of the present invention, each of light sources provided to light guide bodies is independently driven by a light source drive circuit so that each light source is independently turned on. In addition, among lines provided on the light source wiring board connected to the light sources, at least two high potential lines are arranged to be a common line.

Further, as described above, an electronic device of the present invention includes the above-described light source module.

Therefore, in a case where a side edge light guide plate is divided into a plurality of blocks, it is possible to provide a light source module whose thickness can be reduced by reduction of a wiring area, and an electronic device including the light guide module.

### Brief Description of Drawings

Fig. 1

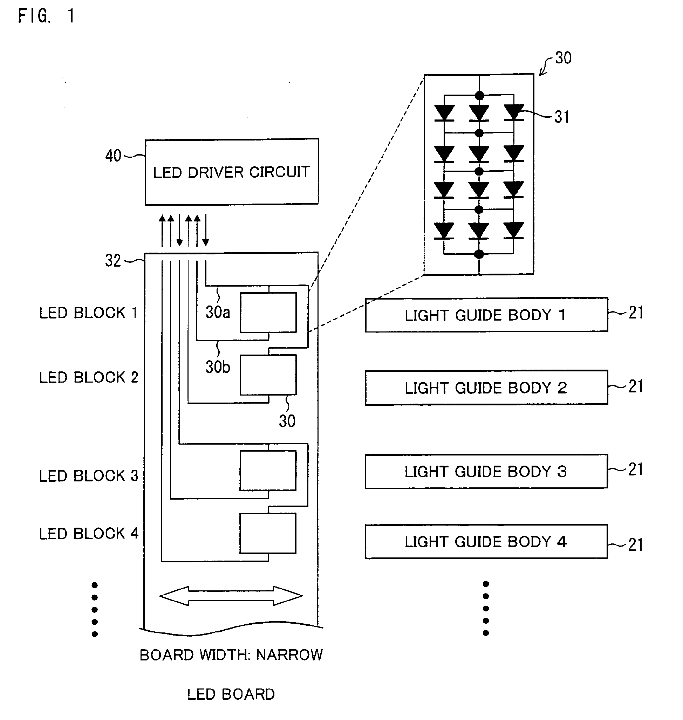

   Fig. 1 illustrates an embodiment of a light source module of the present invention and is a block diagram illustrating a light source and a light source wiring board.
Fig. 2

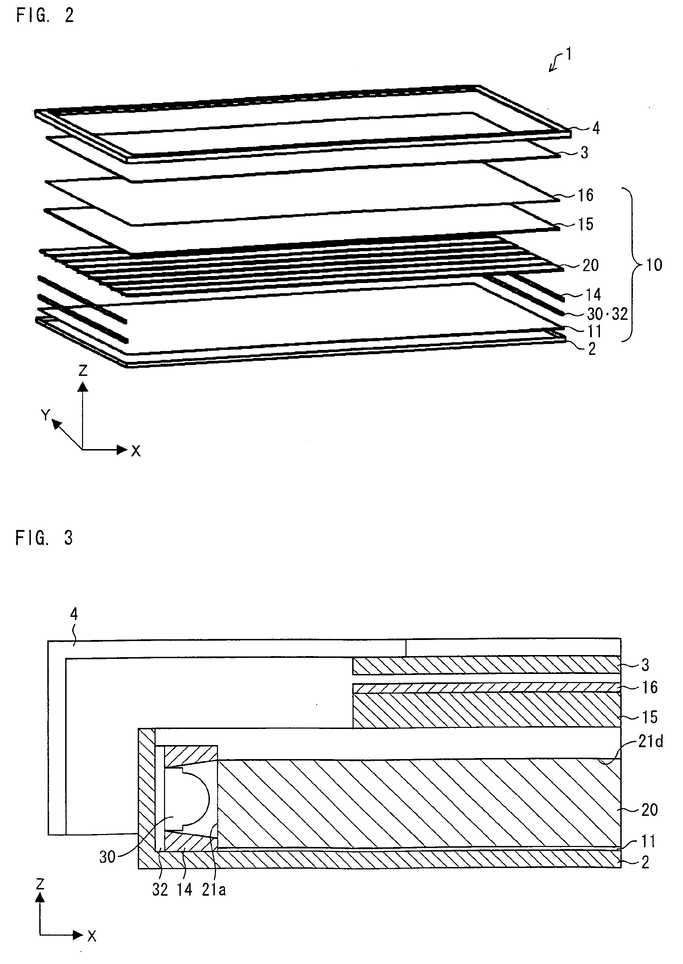

   Fig. 2 is an exploded perspective view illustrating a configuration of a liquid crystal display device including the light source module.
Fig. 3
   Fig. 3 is a cross sectional view illustrating a configuration of a part of a liquid crystal display device including the light source module.
Fig. 4

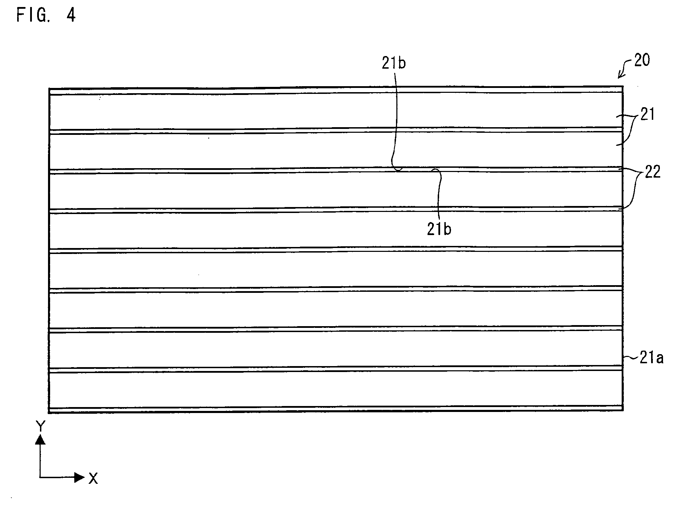

   Fig. 4 is a plan view illustrating a configuration of a light guide plate in the light source module.
Fig. 5(a)

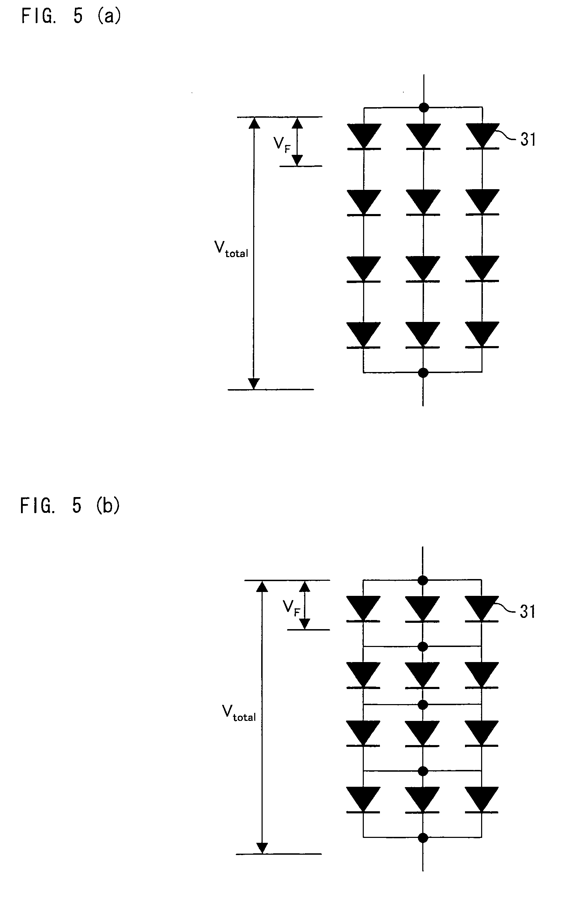

   Fig. 5(a) is a circuit diagram of a circuit in which groups of a plurality of LEDs connected in series for constituting the light source are connected in parallel.
Fig. 5(b)
   Fig. 5(b) is a circuit diagram of a circuit in which groups of a plurality of LEDs connected in parallel for constituting the light source are connected in series.
Fig. 6

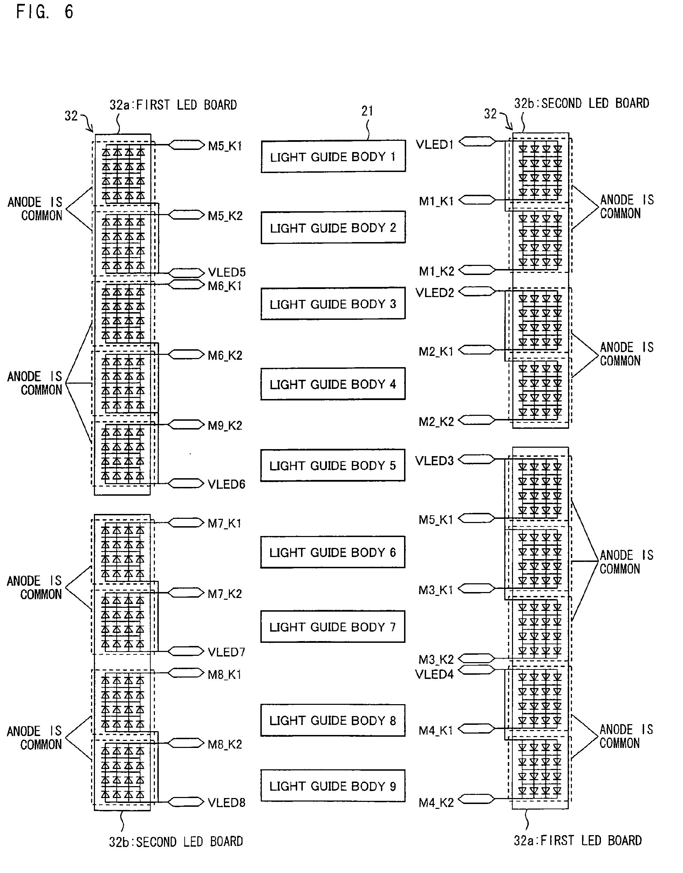

   Fig. 6 is a layout drawing illustrating how (i) light guide bodies correspond to (ii) first and second LED boards which (i) and (ii) constitute the light source module.
Fig. 7(a)

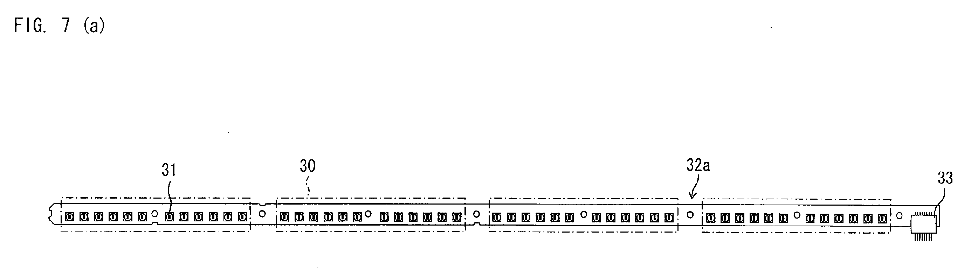

   Fig. 7(a) is a front view illustrating a configuration of the first LED board.
Fig. 7(b)

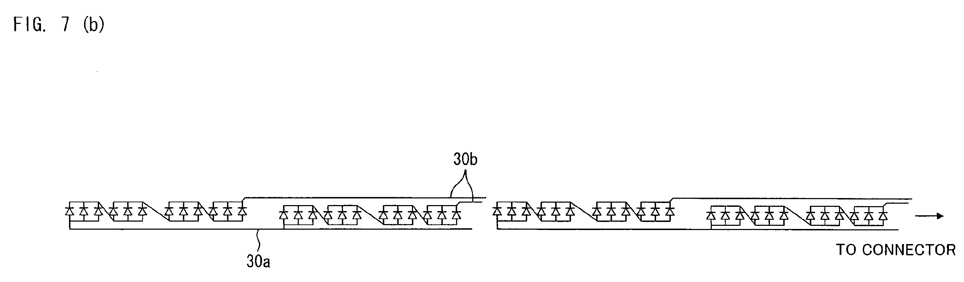

   Fig. 7(b) is a circuit diagram illustrating a configuration of the first LED board.
Fig. 8

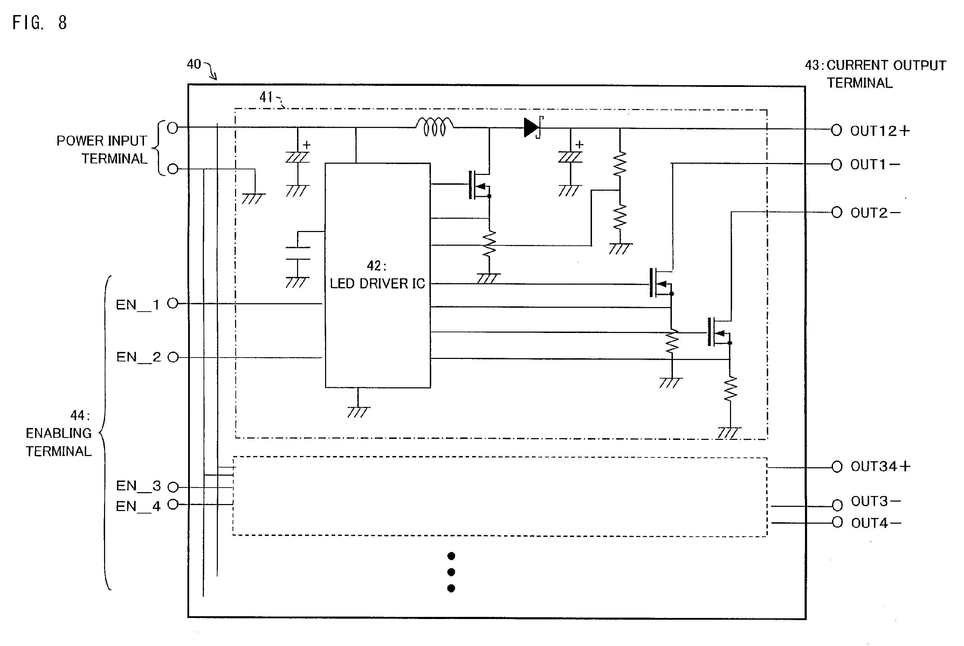

   Fig. 8 is a block diagram illustrating input/output terminals and an internal configuration of an LED driver circuit constituting the light source module.
Fig. 9

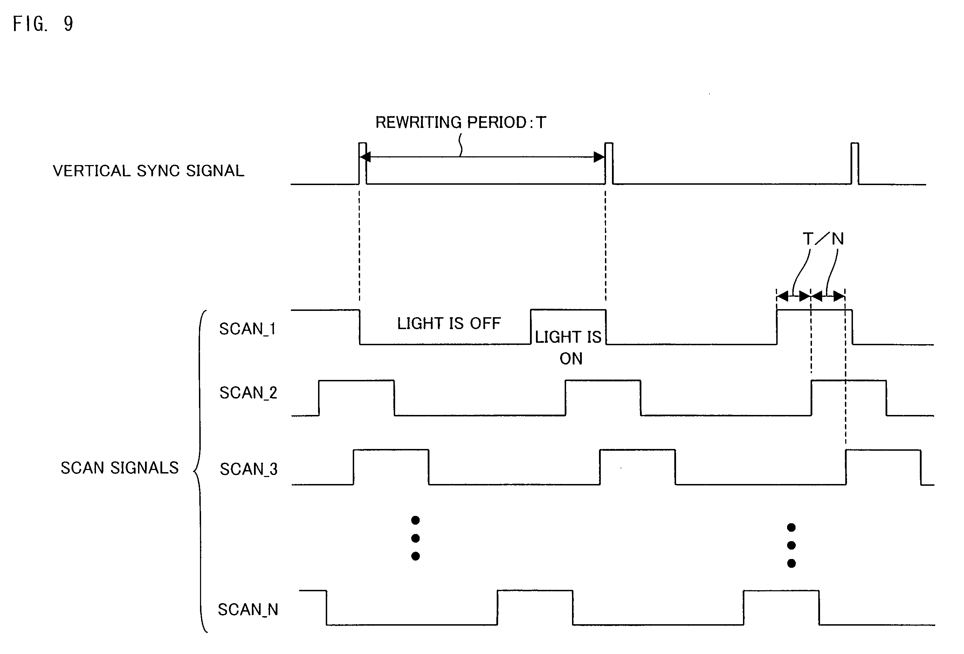

   Fig. 9 is a timing chart illustrating a relation between a vertical sync signal and scan signals in a case where "backlight scan" is carried out in the light source module.
Fig. 10(a)

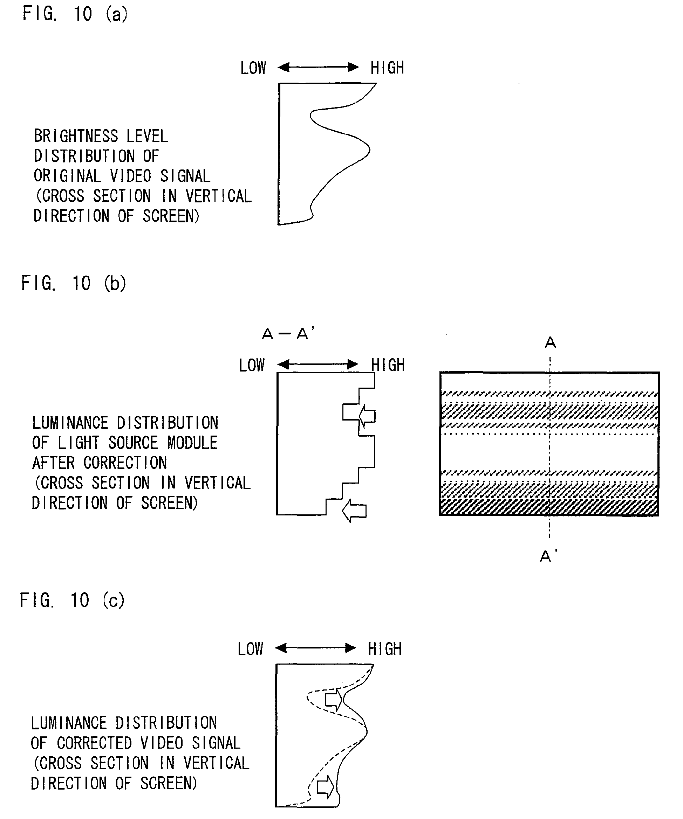

   Fig. 10(a) is a diagram illustrating a brightness distribution of an original video image signal in a vertical direction of a liquid crystal display screen in a case where "local dimming" is carried out in the light source module.
Fig. 10(b)
   Fig. 10(b) is a diagram illustrating a luminance distribution of a light source module after correction in the vertical direction of the liquid crystal display device.
Fig. 10(c)
   Fig. 10(c) is a diagram illustrating a luminance distribution of a corrected video signal in the vertical direction of the liquid crystal display device.
Fig. 11(a)
   Fig. 11(a) is a plan view illustrating a configuration of a conventional light source module.
Fig. 11(b)
   Fig. 11(b) is a front view illustrating a configuration of the conventional light source module.
Fig. 11(c)
   Fig. 11(c) is a cross sectional view taken along a line A-A' of Fig. 11(a).
Fig. 12
   Fig. 12 is a block diagram illustrating a configuration of a light source wiring board in the conventional light source module.

### Description of Embodiments

The following explains one embodiment of the present invention, with reference to Figs. 1 to 10.

One example of an electronic device including a light source module 10 that is a so-called backlight according to the present embodiment is a liquid crystal display device 1. As shown in Fig. 2, the liquid crystal display device 1 includes a chassis 2, a light source module 10, a liquid crystal panel 3, and a bezel 4 in this order from the bottom of Fig. 2. The light source module 10 includes a reflection sheet 11 as a reflector plate, a light source 30, a light source wiring board 32, a reflector 14, a light guide plate 20, a diffuser plate 15, and an optical sheet group 16. Note that in the present invention, the optical sheet group 16 is dispensable.

The light source 30, the light source wiring board 32 and the reflector 14 are provided as shown in Fig. 3 to an end section of the light guide plate 20. This causes light from the light source 30 to enter one end surface 21a of the light guide plate 20 and consequently, the light is thrown onto the liquid crystal panel 3 from an exit surface 21 d of the light guide plate 20 through the diffuser plate 15 and the optical sheet group 16. Therefore, the light source module 10 of the present embodiment employs a side edge (also called sidelight) system.

Generally, as compared with a CRT (Cathode-Ray Tube) display device, a liquid crystal display device has a more serious problem concerning a blur in a moving image. That is, in a CRT display device, there is a non-light emitting period in which a pixel does not emit light is present between a light emitting period of the pixel in one frame and another light emitting period of this pixel in the next frame. Therefore, a feel of viewing an afterimage less occurs. On the other hand, a display system of the liquid crystal display device 1 is a "hold-type" in which such a non-light emitting period is absent. As a result, a feel of viewing an afterimage occurs and a user recognizes this feel of viewing an afterimage as a blur in a moving image.

In order to solve this problem, for a backlight liquid crystal display device, a technique called "backlight scan" is proposed. In the "backlight scan", a light source module as a backlight is divided into a plurality of blocks and the backlight is sequentially turned off from a top to a bottom of a screen in synchronization with rewriting of video signals. This suppresses the feel of viewing an afterimage and makes it possible to improve performance of moving image display.

Further, in a liquid crystal display device, a phenomenon called "floating black" is well known. The "floating black" is a leakage of little light from a liquid crystal element to a display surface even in a black display area of a video image. This leakage occurs because a backlight is always turned on in the liquid crystal display device. As a result of the "floating black", a black display area of the video image cannot be made complete dark. Consequently, a bright and dark contrast of an image deteriorates.

Meanwhile, in a backlight liquid crystal display device, it is known that "floating black" can be reduced by (i) dividing a light source module as a backlight into a plurality of blocks, and (ii) correcting luminances of a video signal in accordance with a luminance distribution so that, while a luminance of a light source block corresponding to a dark part of a video image is decreased, a luminance of a light source block corresponding to a bright part of the image is increased. This technique is called "local dimming". This technique makes it possible to improve a contrast of the liquid crystal display device and to improve display performance.

In the light source module 10 of the present embodiment, for carrying out the backlight scan or the local dimming, as shown in Fig. 4, the light guide plate 20 is divided into a plurality of light guide bodies 21. The plurality of light guide bodies 21 are provided in parallel with respect to a longitudinal direction so as to have a gap 22 between adjacent light guide bodies 21. In the present embodiment, as shown in Fig. 3, the light source 30 is configured so that light enters through both (i) one end surface 21 a of each light guide body 21 in the longitudinal direction and (ii) the other end surface (not shown) of each light guide body 21 in the longitudinal direction. Note that light is not necessarily arranged to enter through the one end surface 21 a and the other end surface but may be arranged to enter through only one end surface in the longitudinal direction. That is, in the present embodiment, light is only required to enter through at least one end surface 21a.

Here, in the present embodiment, as shown in Fig. 1, each light source 30 is made of the plurality of LEDs (Light Emitting Diodes) 31. The plurality of LEDs 31 are connected, via lines provided on the light source wiring board 32 to the LED driver circuit 40 that serves as a light source drive circuit that carries out drive for turning on each LED 31. Further, in the present embodiment, drive for turning on each light source 30 is carried out independently by the LED driver circuit 40.

The light source 30 of the present embodiment is made of twelve LEDs 31 in total includes, and has, for example, a circuit configuration in which every four LEDs are connected in series and every three LEDs are connected in parallel. The number of LEDs connected in series and the number of LEDs connected in parallel can be changed as appropriate according to optical characteristics of the LEDs 31, a required specification of the light source module 10, and/or the like. Further, it is also possible to change types and/or the number of LEDs 31 among the plurality of light sources 30 in one light source module 10. Note that though the LEDs 31 used in the present embodiment are, for example, white LEDs, the configuration of the present invention is not necessarily limited to this. LEDs of other colors or a combination of LEDs of a plurality of colors such as red, blue, green, and the like may also be used.

In the light source 30 in the light source module 10 of the present embodiment, when the plurality of LEDs 31 are connected in series and parallel, a side to be connected to an anode terminal of an LED which anode terminal has the highest potential is defined as an anode side and a side connected to a cathode terminal of the LED 31 which cathode terminal has the lowest potential is defined as a cathode side. In a case where the light source 30 is turned on by connecting the light source 30 to an external circuit, it is required to connect the anode side to a line having a positive potential and to connect the cathode side to a line having a negative potential. That is, for each one light source 30, two lines are required.

For carrying out a drive to independently turn on each light source 30, it is required to draw independently lines of the anode side and the cathode side. Accordingly, in a case where the number of light sources 30 is N (N is a positive integer), 2N lines are required. As a result, a width of the light source wiring board 32 provided on a side surface of each light guide body 21 becomes large for securing a wiring area. Consequently, it becomes impossible to reduce a thickness of the light source module 10 and an electronic device including the light source module 10.

In order to solve this problem, in the present embodiment, between (i) anode lines 30a and (ii) cathode lines 30b of at least every two light sources 30 among the light sources 30, at least the anode lines 30a are arranged to be a common line. Note that in the present embodiment, between (i) anode lines 30a and (ii) cathode lines 30b of every two adjacent light sources 30, the anode lines 30a are arranged to be a common line. However, the present invention is not necessarily limited to this configuration.

The above configuration makes it possible to reduce a thickness of the light source module 10 by reducing the number of lines on the light source wiring board 32 and reducing a width of the light source wiring board 32. Note that the anode lines 30a are arranged to be a common line because the anode lines 30a are lines by which the highest potentials of the light sources 30 are connected to each other. Further, in the present embodiment, the light source 30 is made of the plurality of LEDs 31. In general, deviations in product quality of the LEDs 31 are large. In a case where a plurality of LEDs 31 are used for each light source 30 as described above, the deviation in product quality is magnified if groups of LEDs connected in series are connected in parallel. Consequently, a difference in luminance between light sources 30 becomes large.

In order to solve this problem, in the present embodiment, as shown in Fig. 1, the plurality of LEDs 31 of the light source 30 does not have a configuration in which groups of LEDs 31 connected in series are connected in parallel. In the present embodiment, the plurality of LEDs 31 are configured such that groups of LEDs 31 connected in parallel are connected in series. That is, the light source 30 has a so-called matrix-form wiring in which intermediate potentials are connected to each other.

As a result, in a case where (i) the number of LEDs connected in series is identical to the number of LEDs connected in parallel and (ii) quality deviations of individual LEDs are at an identical level, a total quality deviation is lower in a case using LEDs in a configuration in which groups of parallel-connected LEDs are connected in series rather than in a case using LEDs in a configuration in which groups of series-connected LEDs are connected in parallel.

More specifically, as shown in Fig. 5(a), in a case where: (i) the number of LEDs connected in series is identical to the number of LEDs connected in parallel; (ii) deviations in forward voltage V_{F} of the LEDs 31 are at an identical level; and (iii) groups of series-connected LEDs are connected in parallel, a deviation in total voltage Vₜₒₜₐₗ is a sum of deviations of forward voltages V_{F}. Meanwhile, as shown in Fig. 5(b), in a case where groups of parallel-connected LEDs are connected in series, a deviation of the forward voltage V_{F} of each of the groups of parallel-connected LEDs becomes smaller than deviations in forward voltages V_{F} of respective individual LEDs 31. This is because, in such a configuration, the deviations of the respective individual LEDs 31 are averaged or the like.

For simplification, it is assumed that a forward current - forward voltage characteristic of the LED 31 is in a simple proportional relation. Then, a forward voltage of each one group of parallel-connected LEDs 31 connected as shown in Fig. 5(b) is an average value of forward voltages V_{F} of individual LEDs 31. Because a standard deviation of an average value in a case where the number of samples is N is 1/√N of a standard deviation of a population. Accordingly, if the number N of parallel-connected LEDs in one light source block is 3, a deviation δV_{Fb} of a forward voltage V_{F} of one group of parallel-connected LEDs in the case of Fig. 5(b) is considered to be reduced to 1/√N, that is approximately 1/√3, of a deviation δV_{Fa} of a forward voltage V_{F} of an individual LED of a case as shown in Fig. 5(a).

However, because an actual forward current - forward voltage characteristic of the LED 31 is not a simple direct proportional relation, a relation between the deviations δV_{Fa} and δV_{Fb} is more complicated than the relation as described above. However, it is considered that a basic trend does not change.

Accordingly, in a case where the reduced deviations of the forward voltages V_{F} are connected in series, it is found that a deviation in total voltage Vₜₒₜₐₗ is smaller than a deviation in total voltage Vₜₒₜₐₗ of a case where groups of series-connected LEDs are connected in parallel.

In such a case, in a configuration where groups of parallel-connected LEDs are connected in series, a current deviation of each light source 30 is small even in a case where anode lines 30a between (i) the anode lines 30a and (ii) cathode lines 30b of at least every two light sources 30 among the light sources 30 are arranged to be a common line. Therefore, it is possible to reduce a difference in luminance between light sources 30.

Further, in the present embodiment, as shown in Fig. 6, the light source wiring boards 32 are provided at respective end surfaces of the light guide body 21 in a longitudinal direction of the light guide body 21. Each light source wiring board 32 includes a first LED board 32a as a first light guide body group board and a second LED board 32b as a second light guide body group board, separately. Each of the first LED board 32a and the second LED board 32b extends over a plurality of light guide bodies 21. Though not shown, the LED driver circuit 40 is provided to each of an end surface of the first LED board 32a and an end surface of the second LED board 32b which end surfaces are opposite to opposed end surfaces of the first LED board 32a and the second LED board 32b each of which opposed end surfaces faces the first LED board 32a or the second LED board 32b.

According to this configuration, the light source wiring board 32 is divided into the first LED board 32a and the second LED board 32b, and connected respectively to the LED driver circuits 40.

In a large screen liquid crystal display device, a length of one side of a display screen may be over 500 mm. A size of a light source wiring board used for a backlight light source of such a liquid crystal display device exceeds a board size that can be fabricated by a standard board fabrication apparatus. Accordingly, such a light source wiring board cannot be made of only one light source wiring board but needs to be divided into two boards. In this case, for one light source module, four light source wiring boards (two for each end surface in a longitudinal direction of light guide bodies) are required. As a result, a design of the light source wiring board and management of members become troublesome.

In order to solve this problem, as in the present embodiment, two sets of two kinds of light source wiring boards 32 including the first wiring board 32a and the second wiring board 32b are prepared. Then, the order of providing the first LED board 32a and the second LED board 32b on one end on one side in the longitudinal direction of the light guide bodies 21 is reversed on the other end on the other side of the light guide bodies 21. Thereby, the two sets of two kinds of light source wiring boards 32 are provided so as to face each other in a manner such that one first LED board 32a is diagonally across the other first LED board 32a and one second LED board 32b is diagonally across the other second LED board 32b. As a result, for each set of two light source wiring boards 32 among the four light source wiring boards 32, one light source wiring board can be commonly used. This makes it possible to reduce cost for design of the light source wiring boards 32 and management of members. Consequently, it becomes possible to reduce a price of the light source wiring boards 32.

Note that the required number of light sources 30 are 9 for each of left and right sides because one light source module 10 includes nine light guide bodies 21. Correspondingly, five light sources 30 are provided on the first LED board 32a while four light sources 30 are provided on the second LED board 32b. When a liquid crystal display screen is viewed form the front, the first LED boards 32a are provided on an upper left side and a lower right side of the liquid crystal display screen whereas the second LED boards 32b are provided on an upper right side and a lower left side of the liquid crystal display screen. A border line between the first LED board 32a and the second LED board 32b is positioned between the "light guide body 5" and the "light guide body 6" on a left side of the liquid crystal display screen. Meanwhile, on a right side of the liquid crystal display screen, a border line between the first LED board 32a and the second LED board 32b is positioned between the "light guide body 4" and the "light guide body 5". In this way, even in a case where the number of the light guide bodies 21 is an odd number, the light source wiring board 32 can be divided by changing respective lengths of the two kinds of the light source wiring boards 32.

Further, in the present embodiment, as shown in Fig. 7(a) and 7(b), to one end section in a longitudinal direction of the light source wiring board 32, a connector 33 is provided. The connector 33 is for electric connection between the light sources 30 and the LED driver circuit 40. More specifically, as shown in Figs. 7(a) and 7(b), the connector 33 for connecting a line of the first wiring board 32a to the LED driver circuit 40 is provided on a lower side of a right end section of the first LED board 32a. Meanwhile, though not shown, the connector 33 for connecting the line of the second LED board 32b to the LED driver circuit 40 is provided on a lower side of a left end section of the second LED board 32b.

Therefore, in a case where two first LED boards 32a and two second LED boards 32b are provided as described above, the connector 33 is provided to each of upper right, upper left, lower right, and lower left frame sections of the liquid crystal display screen so that the connectors 33 face a backside of the liquid crystal display screen.

A large number of LEDs 31 constituting the light sources 30 are provided at a narrow pitch. Therefore, in many cases, there is no sufficient space for providing the connector 33 between LEDs 31. As described above, by providing the connector 33 so that the connector 33 faces the backside of the frame section of the liquid crystal display screen, the connector 33 can be easily provided and connected to a light source drive circuit board (not shown) provided to the backside of the liquid crystal display screen of the liquid crystal display device 1. Therefore, in the present embodiment, the light source 30 and the external LED driver circuit 40 can be electrically connected to each other easily.

Further, in the present embodiment, as shown in Fig. 8, the LED driver circuit 40 is made of a plurality of drive circuit blocks 41. Each one drive circuit block 41 forms a boost switching converter circuit made of an LED driver IC 42 and individual parts. This drive circuit block is configured to be able to drive each light source 30 described above at a constant current by boosting externally inputted electric source voltage.

In the present embodiment, each drive circuit block 41 includes current output terminals 43 for driving two light sources 30. Among the current output terminals 43, a terminal connected to a lower potential side, that is, a cathode side of each light source 30 is independently provided. Meanwhile, a terminal connected to a higher potential side, that is, an anode side of each light source 30 is arranged to be common. Further, the LED driver IC 42 includes an enabling terminal 44 and capable of switching on/off a boost switching operation by externally inputting a signal. In the present embodiment, each drive circuit block 41 includes two enabling terminals 44 and is arranged to be able to independently turn on/off two light sources 30.

In the LED driver circuit 40 configured as described above, in response to reception of an externally inputted video signal, a scan signal as shown in Fig. 9 is generated from a vertical sync signal and a horizontal sync signal of the video signal, in a generation circuit (not shown) present in a preceding stage of the LED driver circuit 40. In a case where there are N light sources 30, scan signals 1, 2, ..., and N (N is a positive integer) are generated and these signals are inputted into "enabling terminals 1, 2, ..., and N (N is a positive integer" of the LED driver circuit 40, respectively. The "scan signals 1 to N (N is a positive integer)" are PWM (pulse width modulation) light control signals. A cycle of each scan signal is identical to a period for rewriting a video image display determined in one frame period of the video signal. An ON period of one scan signal is delayed by 1/N of a rewriting period T from another ON period of another scan signal. According to the scan signals, the light sources are sequentially turned off in accordance with rewiring of liquid crystal display elements.

Note that in general, one frame period of a video signal used in television broadcasting and/or the like often is 16.6 msec, that is, a frame rate of the video signal often is 60 Hz. However, for improving performance of moving image display, there is a technique for increasing a rewriting frequency of a display to an integer multiple (e.g., two to four times) of a frame rate of a video signal. In this technique, the rewriting frequency is increased by, for example, generating an intermediate image inside the device and inserting the intermediate image between original images. Even in a case where the rewriting frequency of video image display is increased to an integer multiple (e.g., 120 Hz to 240 Hz), the present embodiment can be easily applied by accordingly changing the cycle of each of the scan signals 1 to N to 1/an integer.

As described above, in the present embodiment, "backlight scan" can be performed. In this "backlight scan", in synchronization with a rewiring period of video image display, the light sources corresponding to the plurality of light guide bodies 21 provided in parallel are sequentially turned off.

This makes it possible to suppress a feel of viewing an afterimage and consequently to improve performance of moving image display, in a case where the light source module 10 of the present embodiment is used as a backlight light source of the liquid crystal display device 1.

Further, in the present embodiment, the LED driver circuit 40 can perform PWM light control independently for each light source 30 by using PWM light control signals that are externally inputted into the enabling terminals 44. By changing a duty of PWM light control of each light source 30 from 0 % to 100 %, luminances of respective areas respectively corresponding to the light sources 30 can be linearly changed independently. As a result, "local dimming" as described below can be carried out.

First, a video signal of one pixel is expressed by 8 to 10 bit R (red) data, 8 to 10 bit G (green) data, and 8 to 10 bit B (blue) data. A sum of R (red), G (green), and B (blue) indicates a brightness of the pixel, that is, a level of brightness. Typically, the light source 30 always lights up at a constant level of luminance. However, according to a brightness distribution of an original video image signal as shown in Fig. 10(a), the luminance distribution of the light source 30 is changed as shown in Fig. 10(b) so that a luminance of the light source 30 is decreased at a section where the brightness level of the video image signal is low while a luminance level is maintained at a section where the brightness level is high. Simultaneously, as shown in Fig. 10(c), the brightness distribution of the video signal is corrected so that a product of the luminance distribution of the light source 30 of Fig. 10(b) and a corrected brightness distribution becomes identical to a video image display of the original video image signal. A correction operation of the video signal and the luminance distribution of the light source 30 is carried out for each one frame or each unit including some frames of a video image signal. Then, PWM light control signals for realizing the luminance distribution of the light source 30 obtained as a result of the operation is sent to the enabling terminals 44 of the LED driver circuit 40. By reducing, as described above, a luminance level of the light source module 10 at a section where a brightness level of the video image signal is low, "floating black" can be lessened and a bright and dark contrast can be enhanced.

In this way, it is possible to improve display performance by enhancing a contrast by "local dimming", in a case where the light source module 10 of the present embodiment is used as the backlight light source of the liquid crystal display device 1.

Note that the above described "backlight scan" and "local dimming" can be separately performed or concurrently performed. In a case where the "backlight scan" and the "local dimming" are performed in combination, it is preferable to increase a PWM frequency of the local dimming to approximately some kHz to some tens of kHz and superpose a PWM signal waveform onto a scan signal wave form of the backlight scan. This is because a speed of the frequency of the backlight scan is relatively low in a range of 60 Hz to 240 Hz.

This makes it possible to suppress a feel of viewing an afterimage of a video image in a case where the light source module 10 of the present embodiment is used as a backlight light source of the liquid crystal display device 1. Concurrently, it is also possible to enhance a contrast and further improve display performance.

The liquid crystal display device 1 as an electronic device of the present embodiment includes the light source module 10 of the present embodiment. This makes it possible to provide a liquid crystal display device 1 including the light source module 10 whose thickness can be reduced by reduction of a wiring area, in a case where a side edge light guide plate is divided into a plurality of blocks.

Note that the light source module 10 of the present embodiment can be adapted for liquid crystal display devices 1 of various screen sizes, by changing the number and the length of the light guide bodies and accordingly changing the length of the light source wiring board 32. Further, the light guide bodies 21 do not necessarily need to have a plate shape. An outer shape, a material, protrusions and depressions of a surface, a printed pattern, and/or the like of the light guide bodies 21 can be freely changed in accordance with a required optical characteristic and/or other specifications.

In a case where the light source module 10 of the present embodiment is applied to liquid crystal display devices 1 of various screen sizes, a value of total luminous flux of the light source 30 which value is required for obtaining an identical screen luminance for each of the liquid crystal display devices 1 of different screen sizes varies depending on a screen size. In such a case, by changing the number of parallel-connected or series-connected LEDs 31 constituting the light source 30, the number of LEDs 31 is adjusted so that the total luminous flux is adjusted to a desired value. Note that when the number of parallel-connected LEDs changes, an output voltage of the LED driver circuit 40 changes. As a result, it is required to change an inner circuit constant of the LED driver circuit 40. For commonly using one LED driver circuit 40 for the liquid crystal display devices 1 of different screen sizes as much as possible, it is desirable to make the number of series-connected LEDs equal and make a voltage value constant regardless of a screen size and to make an adjustment by changing a current value, that is, the number of parallel-connected LEDs.

In the present embodiment, one light source 30 is provided on each of both left and right sides of one light guide body 21. However, the present embodiment may have any configuration within the scope that does not spoil the object of the present invention, for example, a configuration in which two light sources 30 are provided on each of both left and right sides of one light guide body 21 or a configuration in which one light source 30 corresponds to two light guide bodies 21.

As described above, in the light source module of the present invention, it is preferable that each light source described above is made of a plurality of LEDs and the plurality of LEDs are arranged such that groups of parallel-connected LEDs are connected in series.

In general, deviations in forward current - forward voltage characteristic of individual LEDs are large. Accordingly, in a case where a plurality of LEDs are used as each light source, forward currents of respective lines vary if a configuration in which groups of series-connected LEDs are connected in parallel. As a result, a difference in luminance between light sources becomes large.

In order to solve this problem, in the present invention, a plurality of LEDs are arranged such that groups of parallel-connected LEDs are connected in series. As a result, in a case where (i) the number of lines of series-connected LEDs is equal to the number of lines of parallel-connected lines and (ii) individual LEDs have a similar level of a deviation in forward current - forward voltage characteristic, a deviation in forward current of total LEDs connected in series in each line becomes smaller in a case using a configuration in which groups of LEDs connected in parallel are connected in series as compared to a case using a configuration in which groups of LEDs connected in series are connected in parallel.

Accordingly, in a case where a configuration in which groups of parallel connected LEDs are connected in series is used, a deviation in current of each light source is small even when anode lines between the anode lines and cathode lines of at least every two light sources among the light sources are arranged to be a common line.

Therefore, it is possible to reduce a difference in luminance between light sources.

The light source module of the present invention can be arranged such that: the light source wiring board is provided to each of both end surfaces in the longitudinal direction of the plurality of light guide bodies, respectively; the light source drive wiring board is provided so as to include a first light guide body group board and a second light guide body group board that are separate boards, the first light guide body group board and the second light guide body group board each extending over a plurality of light guide bodies; and the light source drive circuit is provided to each of an end surface of the first light guide body group board and an end surface of the second light guide body group board, which end surfaces are opposite to opposed end surfaces of the first light guide body group board and the second light guide body group board, each of the opposed end surfaces facing the first light guide body group board or the second light guide body group board.

In the present invention, the light source wiring board is provided to each of both end surfaces in longitudinal direction of the light guide bodies. In this case, each light source wiring board is provided as a first light guide body group board and a second light guide body group board which are separate boards and each of which extends over a plurality of light guide bodies.

As a result, the light source wiring board is divided into the first light guide body group board and the second light guide body group board. Further, each line is connected to the light source drive circuit.

In a large screen liquid crystal display device, a length of one side of a display screen may be over 500 mm. A size of a light source wiring board used for a backlight light source of such a liquid crystal display device exceeds a board size that can be fabricated by a standard board fabrication apparatus. Accordingly, such a light source wiring board cannot be made of only one light source wiring board but needs to be divided into two boards. In this case, for one light source module, four light source wiring boards (two for each end surface in a longitudinal direction of light guide bodies) are required. As a result, a design of the light source wiring board and management of members become troublesome.

In order to solve this problem, as in the present invention, two sets of two kinds of light source wiring boards including the first light guide body group board and the second light guide body group board are prepared. Then, the order of providing the first light guide body group board and the second light guide body group board on one end on one side in the longitudinal direction of the light guide bodies is reversed on the other end on the other side of the light guide bodies. Thereby, the two sets of two kinds of light source wiring boards are provided so as to face each other in a manner such that one first light guide body group board is diagonally across the other first light guide body group board and one second light guide body group board is diagonally across the other light guide body group board. As a result, for each set of two light source wiring boards among the four light source wiring boards, one light source wiring board can be commonly used. This makes it possible to reduce cost for design of the light source wiring boards and management of members. Consequently, it becomes possible to reduce a price.

In the light source module of the present invention, it is preferable that: the light source wiring board is provided with a connector for electrically connecting the light sources and the light source drive circuit, the connector being provided at one end section in a longitudinal direction of the light source wiring board.

This makes it possible to electrically connect an external light source drive circuit and the light sources, even in a case where, for example, a plurality of LEDs constituting each light source are provided at a narrow pitch and there is no sufficient space for providing a connector between LEDs.

Further, the light source module of the present invention can be arranged such that: the light source drive circuit sequentially turns off the light sources corresponding to the plurality of light guide bodies provided in parallel, the light sources being turned off in synchronization with one frame period of an externally inputted video signal.

This makes it possible to suppress a feel of viewing an afterimage of a video image and to improve performance of moving image display, in a case where the light source module of the present invention is used, for example, as a backlight light source of a liquid crystal display device.

Further, the light source module can be arranged such that: the light source drive circuit carries out PWM (pulse width modulation) light control independently for each of the light sources, by use of externally inputted PWM light control signals.

This makes it possible to enhance a contrast and improve display performance, in a case where the light source module of the present invention is used as, for example, a backlight light source of a liquid crystal display device.

### Industrial Applicability

The present invention relates to a light source module including a side edge (also called sidelight) light guide plate for causing surface light emission of light from a light source, and an electronic device including the light source module. The present invention is applicable to, for example, a light source module such as a backlight and an electronic device such as a liquid crystal display device. Reference Signs List
- 1: liquid crystal display device (electronic device)
- 3: liquid crystal panel
- 10: light source module
- 11: reflection sheet
- 15: diffuser
- 20: light guide plate
- 21: light guide body
- 21a: end surface
- 22: gap
- 30: light source
- 30a: anode line (high potential line)
- 30b: cathode line
- 31: LED
- 32: light source wiring board
- 32a: first LED board (first light guide body group board)
- 32b: second LED board (second light guide body group board)
- 33: connector
- 40: LED driver circuit (light source drive circuit)
- 41: drive circuit block
- 42: LED driver IC
- 43: current output terminal
- 44: enabling terminal

## Claims

1. A light source module comprising:
a plurality of light guide bodies provided in parallel to one another with respect to a longitudinal direction;
light sources each causing light to enter each of the plurality of light guide bodies from at least one end surface in a longitudinal direction of the each of the light guide bodies;
a light source wiring board having the light sources and lines provided thereon, the lines being for electrically connecting the light sources and including positive potential lines and negative potential lines; and
a light source drive circuit for performing a drive for turning on the light sources,
the light sources provided for the plurality of light guide bodies being independently driven by the light source drive circuit so that each of the light sources is independently turned on,
the lines being arranged so that at least two high potential lines are arranged to be a common line, the lines being provided on the light source wiring board connected to the light sources.

2. The light source module as set forth in claim 1, wherein:
each of the light sources is made of a plurality of light emitting diodes; and
the plurality of light emitting diodes are connected such that groups of light emitting diodes connected in parallel are connected in series.

3. The light source module as set forth in claim 1, wherein:
the light source wiring board is provided to each of both end surfaces in the longitudinal direction of the plurality of light guide bodies, respectively;
the light source drive wiring board is provided so as to include a first light guide body group board and a second light guide body group board that are separate boards, the first light guide body group board and the second light guide body group board each extending over a plurality of light guide bodies; and
the light source drive circuit is provided to each of an end surface of the first light guide body group board and an end surface of the second light guide body group board, which end surfaces are opposite to opposed end surfaces of the first light guide body group board and the second light guide body group board, each of the opposed end surfaces facing the first light guide body group board or the second light guide body group board.

4. The light source module as set forth in claim 2, wherein:
the light source wiring board is provided to each of both end surfaces in the longitudinal direction of the plurality of light guide bodies, respectively;
the light source drive wiring board is provided so as to include a first light guide body group board and a second light guide body group board that are separate boards, the first light guide body group board and the second light guide body group board each extending over a plurality of light guide bodies; and
the light source drive circuit is provided to each of an end surface of the first light guide body group board and an end surface of the second light guide body group board, which end surfaces are opposite to opposed end surfaces of the first light guide body group board and the second light guide body group board, each of the opposed end surfaces facing the first light guide body group board or the second light guide body group board.

5. The light source module as set forth in claim 3, wherein:
the light source wiring board is provided with a connector for electrically connecting the light sources and the light source drive circuit, the connector being provided at one end section in a longitudinal direction of the light source wiring board.

6. The light source module as set forth in claim 4, wherein:
the light source wiring board is provided with a connector for electrically connecting the light sources and the light source drive circuit, the connector being provided at one end section in a longitudinal direction of the light source wiring board.

7. The light source module as set forth in any one of claims 1 to 6, wherein:
the light source drive circuit sequentially turns off the light sources corresponding to the plurality of light guide bodies provided in parallel, the light sources being turned off in synchronization with one frame period of an externally inputted video signal.

8. The light source module as set forth in any one of claims 1 to 6, wherein:
the light source drive circuit carries out PWM (pulse width modulation) light control independently for each of the light sources, by use of externally inputted PWM light control signals.

9. An electronic device comprising the light source module as set forth in any one of claims 1 to 6.

10. An electronic device comprising the light source module as set forth in claim 7.

11. An electronic device comprising the light source module as set forth in claim 8.
